# EUROPÄISCHE PATENTSCHRIFT

(11) **EP 2 435 281 B1**
(45) Veröffentlichungstag und Bekanntmachung des Hinweises auf die Patenterteilung: **30.10.2013**
(21) Anmeldenummer: 09744149.7
(22) Anmeldetag: 30.10.2009
(51) Int. Cl.: B60S 1/38, C09D 5/00, C09D 7/12, C08J 7/04, B05D 5/08

(54) **WISCHERBLATT FÜR EINEN SCHEIBENWISCHER**
WIPER BLADE FOR A WINDSHIELD WIPER
BALAI D'ESSUIE-GLACE POUR UN ESSUIE-GLACE

(30) Priorität: 25.05.2009 DE 102009026441
(43) Veröffentlichungstag der Anmeldung: 04.04.2012
(73) Patentinhaber: Robert Bosch GmbH, 70442 Stuttgart (DE)
(72) Erfinder: DUVAL, Vincent, B-1030 Bruxelles-Schaerbeek (BE); VERBURGH, Yves, B-2870 Puurs (BE)
(86) Internationale Anmeldenummer: PCT/EP2009/064354
(87) Internationale Veröffentlichungsnummer: WO 2010/136083

(56) Entgegenhaltungen:
- DE-A1- 19 944 274
- DE-A1-102006 009 653
- DE-A1-102007 012 924
- DE-A1-102007 050 120
- DE-U1- 29 701 593
- US-A- 3 080 596
- US-A- 4 716 618

## Beschreibung

Die Erfindung geht aus von einem Wischerblatt für einen Scheibenwischer, insbesondere einen Scheibenwischer für ein Kraftfahrzeug, gemäß dem Oberbegriff des Anspruchs 1.

Wischblätter für Scheibenwischer werden üblicherweise aus Elastomermaterialien gefertigt. Durch die Verwendung der Elastomermaterialien können sich die Wischblätter einerseits an die Kontur einer Windschutzscheibe eines Kraftfahrzeugs anpassen und andererseits wird eine ausreichende Elastizität bei unterschiedlichen Temperaturanforderungen gewährleistet. Derartige Elastromerprofile sind beispielsweise aus Naturkautschuk, Chloropren, Silikon-Kautschuk oder Polyurethan-Gummi hergestellt. Diese E-lastromermaterialien weisen jedoch einen vergleichsweisen hohen Reibungskoeffizienten auf einer zu reinigenden Oberfläche, beispielsweise auf Glas, auf, so dass oftmals ein Vielfaches an Presskraft zur Horizontalbewegung des Wischblattes angelegt werden muss. Zudem verschlechtert sich die Wischqualität durch auf das Wischerblatt wirkendes UV-Licht sowie durch Umwelteinflüsse und durch Verschleiß aufgrund von Reibung. Dies führt dazu, dass die Wischblätter in regelmäßigen Abständen ausgetauscht werden müssen.

Um den richtigen Zeitpunkt zum Austausch der Wischblätter festzulegen, ist es zum Beispiel aus DE-T 699 22 410 bekannt, einen Alterungsindikator vorzusehen, der als Anzeiger auf dem Scheibenwischer aufgebracht ist und eine Substanz auf der Basis zumindest einer Azo-Verbindung enthält, deren Empfindlichkeit gegenüber chemischen und physikalischen Bedingungen sowie mechanischen Beanspruchungen vergleichbar ist mit denjenigen der Elastomere, aus denen die Wischgummis bestehen. Aufgrund der Farbänderung des Alterungsanzeigers lässt sich erkennen, wann das Wischerblatt gewechselt werden muss.

Anzeigevorrichtungen, die durch Farbänderungen oder durch andere optische Veränderungen zeigen, dass das Wischerblatt gewechselt werden muss, sind zum Beispiel aus DE-T 699 25 738 oder US 5,349,718 bekannt. Die Farbänderung erfolgt dabei jeweils zum Beispiel durch Einfluss von Wasser oder von UV-Licht.

Eine Beschichtung, die eingesetzt wird, um Verschleiß zu erkennen, ist aus US 2,971,209 bekannt. Die Beschichtung weist eine andere Farbe auf als der Kern des Wischerblattes. Sobald die Beschichtung durch Verschleiß abgetragen ist und der andersfarbige Kern auftritt, wird hierdurch angezeigt, dass das Wischerblatt gewechselt werden muss.

US-A-4 716 618 offenbart den Oberbegriff des Anspruchs 1.

### Offenbarung der Erfindung

Ein erfindungsgemäß ausgebildetes Wischerblatt für einen Scheibenwischer, insbesondere einen Schreibenwischer für ein Kraftfahrzeug, umfasst ein Wischgummi aus einem Elastomermaterial mit einer Wischlippe. Das Wischgummi weist an der Wischlippe eine raue Oberfläche auf und auf die raue Oberfläche ist eine Beschichtung aus einem weichen Material aufgebracht, die eine glatte Oberfläche aufweist.

Durch die Beschichtung der Oberfläche aus dem weichen Material mit der glatten Oberfläche wird ein im Wesentlichen schlierenfreies Wischbild erzielt. Auch kann durch die Beschichtung der Reibungskoeffizient herabgesetzt werden, so dass der Scheibenwischer im Betrieb nicht rattert. Durch die Verwendung eines weichen Materials wird Beschichtungsmaterial über die Lebensdauer des Scheibenwischers durch Reibung abgetragen, bis die raue Oberfläche, die unter der Beschichtung liegt, frei wird. Durch die raue Oberfläche verschlechtert sich zu diesem Zeitpunkt das Wischbild massiv. Durch die Verschlechterung des Wischbildes wird angezeigt, dass ein Wechsel des Wischerblatts erforderlich ist.

Um einen schnellen Abfall in der Wischqualität zu erzielen, wenn das Wischerblatt wegen Alterungserscheinung ausgewechselt werden sollte, ist es bevorzugt, wenn die raue Oberfläche eine Rauigkeit im Bereich von 10 bis 100 µm aufweist. Insbesondere ist es bevorzugt, wenn die Rauigkeit im Bereich von 20 bis 50 µm liegt. Sobald die raue Oberfläche durch Abrieb der Beschichtung frei gelegt ist, nimmt die Wischqualität ab und es bilden sich zum Beispiel Schlieren beim Wischen. Der Nutzer bekommt so einen eindeutigen Hinweis, dass es Zeit ist, das Wischerblatt zu wechseln.

Um die raue Oberfläche zu erzeugen, ist es zum Beispiel möglich, auf das Elastomer eine Beschichtung aufzubringen, die die raue Oberfläche aufweist. In diesem Fall wird die raue Oberfläche entweder direkt durch das Beschichtungsmaterial erzeugt oder es wird zunächst eine Beschichtung aufgetragen und die Oberfläche im Anschluss daran aufgeraut.

Das Aufbringen der Beschichtung, die die raue Oberfläche aufweist, kann durch jedes beliebige, dem Fachmann bekannte Verfahren erfolgen. So ist es zum Beispiel möglich, die Beschichtung durch Sprühverfahren, Tauchverfahren oder beliebige Druckverfahren aufzubringen. Auch ist es möglich, die Beschichtung durch Pinseln, Streichen oder Rakeln aufzutragen. Besonders bevorzugt wird die Beschichtung jedoch durch Sprüh- oder Tauchverfahren aufgebracht.

Geeignete Zusammensetzungen, die als Beschichtung, die die raue Oberfläche aufweist, auf das Elastromermaterial aufgebracht werden, enthalten zum Beispiel Füllstoffpartikel.

Wenn die raue Oberfläche durch das Auftragen der Beschichtung erzeugt wird, so wird vorzugsweise eine Beschichtung eingesetzt, die Polyethylenfüllstoff, Silica oder Glasperlen enthält.

Wenn die raue Oberfläche nach dem Auftragen der Beschichtung erzeugt wird, so werden vorzugsweise Zusammensetzungen eingesetzt, die Polyurethan und einen Infrarotabsorber enthalten.

Neben dem Einsatz einer Beschichtung zum Erzeugen der rauen Oberfläche ist es auch möglich, dass das Elastomermaterial die raue Oberfläche aufweist. In diesem Fall wird die raue Oberfläche nach dem Extrudieren und Vulkanisieren des Elastomermaterials zu einem Strangprofil, aus dem das Wischgummi geschnitten wird, erzeugt. Geeignete Verfahren, um die raue Oberfläche zu erzeugen, sind zum Beispiel Laserablation, mechanische Abrasion oder der Einsatz eines Werkzeugs mit rauer Oberfläche.

Die gleichen Verfahren können auch zum Aufrauen einer Beschichtung eingesetzt werden, wenn eine Beschichtung eine raue Oberfläche aufweisen soll.

Die Herstellung des Wischgummis aus dem Elastomermaterial erfolgt üblicherweise durch ein Extrusionsverfahren mit anschließender Vulkanisation. Es ist jedoch auch möglich, das Wischgummi zum Beispiel durch Spritzgussverfahren zu formen. Nach dem Extrudieren wird dann die Oberfläche des Elastomermaterials aufgeraut oder die Beschichtung aufgebracht, die die raue Oberfläche aufweist.

Als Elastomermaterialien zur Herstellung des Wischgummis eignen sich zum Beispiel Naturkautschuk (NR), Chloropren-Kautschuk (CR), Butadien-Kautschuk (BR), Styrol-Butadien-Kautschuk (SBR), Ethylen-Propylen-Copolymere (EPM), Ethylen-Propylen-Dien-Terpolymere (EPDM), Ethylen-Vinylacetat-Copolymere (EVM), chloriertes Polyethylen (CM), chlorsulfoniertes Polyethylen (CSM), Acrylnitril-Butadien-Kautschuk (NBR), hydrierter Acrylnitril-Butadien-Kautschuk (HNBR), Fluorkautschuk (FPM), Polyurethan-Elastomer (PUR), Mischungen aus Acrylnitril-Butadien-Kautschuk und Polyvinylchlorid (NBR/PVC), sowie Mischungen aus diesen Materialen.

Besonders bevorzugt ist das Elastomermaterial ausgewählt aus der Gruppe bestehend aus Ethylen-Propylen-Dien-Terpolymere, Naturkautschuk, Chloropren-Kautschuk oder einer Mischung daraus.

Nach dem Aufbringen der Beschichtung, die die raue Oberfläche enthält oder dem Aufrauen des Elastomermaterials bzw. nach dem Aufrauen der Beschichtung wird die Beschichtung aus dem weichen Material aufgebracht, die die glatte Oberfläche aufweist. Das Aufbringen der Beschichtung, die die glatte Oberfläche aufweist, erfolgt ebenfalls zum Beispiel durch Tauchverfahren, Sprühverfahren, Druckverfahren, Pinseln, Streichen oder Rakeln. Bevorzugt wird die Beschichtung, die die glatte Oberfläche aufweist, durch Sprühverfahren aufgebracht.

Um ein zufrieden stellendes Wischergebnis zu erzielen, d. h. ein Wischen der Scheiben ohne dass Schlieren erzeugt werden, enthält die Beschichtung aus dem weichen Material zum Beispiel Polyvinylalkohol oder Polyvinylacetal.

Geeignete Zusammensetzungen für die Beschichtung aus dem weichen Material sind zum Beispiel Mischungen aus Polyester und Polyvinylalkohol oder vernetzte Polyvinylalkohole.

Zusätzlich kann die Beschichtung aus dem weichen Material Trockenschmierstoffpartikel enthalten, durch die die Reibung herabgesetzt wird. Durch Herabsetzen der Reibung wird vermieden, dass das Wischerblatt im Betrieb rattert.

Um ein schlierenfreies Wischen zu ermöglichen und so ein zufrieden stellendes Wischergebnis bereit zu stellen, ist es bevorzugt, wenn die Beschichtung aus dem weichen Material eine Rauigkeit im Bereich von 1 bis 10 µm aufweist. Bevorzugt liegt die Rauigkeit im Bereich von 1 bis 8 µm und insbesondere im Bereich von 1 bis 5 µm.

Während des Betriebs des Wischerblattes nimmt die Schichtdicke der Beschichtung aus dem weichen Material mit der glatten Oberfläche durch Verschleiß ab. Die Abnahme der Schichtdicke erfolgt so lange, bis die Schicht komplett abgetragen ist und die raue Oberfläche der darunter liegenden Beschichtung oder des darunter liegenden Elastomermaterials freigelegt wird. Durch das Freilegen der rauen Oberfläche nimmt die Wischqualität rapide ab. Da das Elastomermaterial durch Umwelteinflüsse und UV-Einstrahlung altert, kann ein Wischerblatt nicht beliebig lange verwendet werden, sondern muss in regelmäßigen Abständen ausgetauscht werden. Die Schichtdicke der Beschichtung aus dem weichen Material, das die glatte Oberfläche aufweist, ist daher so gewählt, dass die Beschichtung durch Verschleiß zu dem Zeitpunkt, zu dem das Elastomermaterial aufgrund von Alterungserscheinungen ausgetauscht werden soll, soweit abgetragen ist, dass die raue Oberfläche der darunter liegenden Beschichtung oder des darunter liegenden Elastomermaterials freigelegt wird. Die Schichtdicke hängt dabei vom eingesetzten Material der Beschichtung aus weichem Material ab und von der gewünschten Lebensdauer des Wischerblattes.

Geeignete Schichtdicken für die Beschichtung aus dem weichen Material, die die glatte Oberfläche aufweist, liegen zum Beispiel im Bereich von 10 bis 100 µm, bevorzugt im Bereich von 20 bis 50 µm und insbesondere im Bereich von 20 bis 40 µm.

Da üblicherweise glatte Oberflächen mit einem Scheibenwischer gereinigt werden, bleibt die Oberfläche der Beschichtung aus dem weichen Material auch bei Abnahme der Schichtdicke durch Abrieb aufgrund von Wettereinflüssen und Verschleiß glatt. Um zu vermeiden, dass die Beschichtung durch Fremdkörper beschädigt wird, beispielsweise Sand oder Dreck auf der Windschutzscheibe eines Kraftfahrzeuges, ist das Material, aus dem die Beschichtung mit der glatten Oberfläche gefertigt ist, vorzugsweise so fest mit der darunter liegenden Schicht verbunden und ausreichend zäh, dass die Beschichtung durch derartige Verunreinigungen nicht beschädigt wird.

Eine feste Verbindung der Beschichtung mit dem darunter liegenden Elastomermaterial oder der darunter liegenden Beschichtung kann zum Beispiel dadurch erzielt werden, dass die zu beschichtende Fläche vorbehandelt wird. Eine solche Vorbehandlung kann zum Beispiel auch erforderlich sein, bevor die Beschichtung mit der rauen Oberfläche auf das Elastomermaterial aufgebracht wird. Geeignete Vorbehandlungen sind zum Beispiel Plasmaverfahren oder das Aufbringen von geeigneten Primern, die als Haftungsvermittler zwischen der darunter liegenden und der aufzubringenden Schicht dienen. Wenn eine Beschichtung vorgesehen ist, die die raue Oberfläche aufweist, so kann diese Beschichtung zum Beispiel auch der Primer sein.

Neben dem Einsatz als Scheibenwischer von Kraftfahrzeugen lässt sich das erfindungsgemäß gestaltete Wischerblatt zum Beispiel auch in Abziehvorrichtungen für Glasscheiben, wie sie zum Beispiel zur Reinigung von Fensterscheiben an Gebäuden verwendet werden, einsetzen.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine schematische Darstellung eines Abschnitts einer Wischlippe mit darauf aufgebrachter Beschichtung,
- Figur 2: eine schematische Darstellung einer Wischlippe, von der die Beschichtung durch Verschleiß abgetragen wurde.

### Ausführungsformen der Erfindung

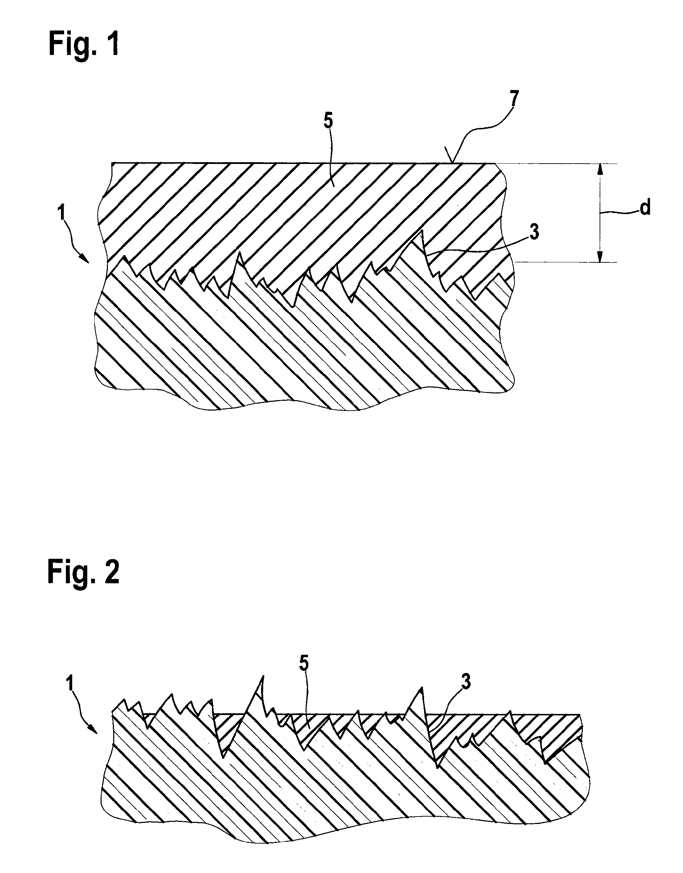

Ein Ausschnitt aus einem Wischgummi mit rauer Oberfläche und darauf aufgebrachter Beschichtung ist in Figur 1 schematisch dargestellt.

Wischgummis 1 von Scheibenwischern werden zum Beispiel durch Extrusion eines Strangprofils aus einem Elastomermaterial und anschließende Vulkanisierung hergestellt. Das Strangprofil weist dabei zum Beispiel die Gestalt eines Doppelprofils auf, wobei zwei Wischgummis 1 jeweils an der Wischlippe miteinander verbunden sind. Nach Extrusion und Vulkanisation wird das Doppelprofil entlang der Mittellinie an der Wischlippe getrennt. Alternativ ist es jedoch auch möglich, Einzelprofile zu extrudieren oder das Wischgummi 1 zum Beispiel durch Spritzgussverfahren herzustellen.

Das Elastromermaterial, aus dem das Wischgummi 1 hergestellt wird, ist zum Beispiel, wie bereits zuvor erwähnt, Naturkautschuk, Chloropren-Kautschuk, Butadien-Kautschuk, Styrol-Butadien-Kautschuk, ein Ethylen-Propylen-Copolymer, ein Ethylen-Propylen-Dien-Terpolymer, ein Ethylen-Vinylacetat-Copolymer, chloriertes Polyethylen, chlorsulfoniertes Polyethylen, Acrylnitril-Butadien-Kautschuk, hydrierter Acrylnitril-Butadien-Kautschuk, Fluorkautschuk, Polyurethan-Elastomer, Mischungen aus Acrylnitril-Butadien-Kautschuk und Polyvinylchlorid, oder eine Mischung aus diesen Materialen.

Nach dem Extrudieren und Vulkanisieren des Elastomermaterials und, sofern dieses als Doppelprofil hergestellt wird, nach dem Schneiden des Doppelprofils in Einzelprofile, wird die Wischlippe, d. h. der Bereich des Wischgummis 1, der später über die zu reinigende Oberfläche gleitet, mit einer rauen Oberfläche versehen. Hierzu ist es zum Beispiel möglich, das Elastomermaterial aufzurauen. Das Aufrauen des Elastomermaterials kann zum Beispiel durch Laserablation, mechanische Abrasion oder den Einsatz eines Werkzeugs mit rauer Oberfläche erfolgen.

Alternativ ist jedoch auch möglich, auf das Elastomermaterial eine Beschichtung aufzutragen, durch die die raue Oberfläche 3 erzeugt wird. Hierzu ist es einerseits möglich, eine Beschichtung aufzubringen, die von sich aus eine raue Oberfläche 3 bildet oder aber die Oberfläche der Beschichtung nach dem Aufbringen der Beschichtung aufzurauen.

Auf die raue Oberfläche 3 wird anschließend eine Beschichtung 5 aufgebracht. Die Beschichtung 5 weist eine glatte Oberfläche 7 auf, wodurch eine gute Wischqualität erzielt wird. Zusätzlich kann die Beschichtung 5 auch beispielsweise Trockenschmierstoffpartikel enthalten, um ein Rattern im Betrieb des Scheibenwischers zu vermeiden. Die Beschichtung 5 ist aus einem weichen Material gefertigt, das durch Umwelteinflüsse und UV-Strahlung sowie durch Nassreibung beim Reinigen der Scheibenfläche durch Verschleiß abgebaut wird. Hierdurch reduziert sich allmählich die Schichtdicke d der Beschichtung 5.

Als Schichtdicke d wird dabei die Dicke der Beschichtung 5 bezeichnet, die sich von der mittleren Ebene der rauen Oberfläche 3 zur glatten Oberfläche 7 hin erstreckt. Als mittlere Ebene der rauen Oberfläche 3 wird dabei die Ebene bezeichnet, von der aus 50 % der die Oberfläche bildenden Struktur oberhalb der Ebene und 50 % unterhalb der Ebene liegt.

Die Schichtdicke d der Beschichtung 5 wird so gewählt, dass nach einer vorbestimmten Lebensdauer des Wischgummis die Beschichtung so weit abgetragen ist, dass die raue Oberfläche 3 der darunter liegenden Schicht frei wird. Die raue Oberfläche 3 weist nur eine schlechte Wischqualität auf, so dass die Wischqualität des Scheibenwischers rapide abnimmt, sobald die Beschichtung 5 soweit abgebaut wurde, dass die raue Oberfläche 3 hervor tritt. Dies ist in Figur 2 dargestellt. Aufgrund der schlechten Wischqualität wird der Nutzer nun gezwungen, das Wischgummi auszuwechseln. Auf diese Weise erhält der Nutzer einen deutlichen Hinweis darauf, dass es notwendig ist, das Wischgummi auszuwechseln. Durch die Beschichtung wird zudem gewährleistet, dass die Wischqualität über den Bezugszeitraum des Scheibenwischers gleich bleibend ist.

## Patentansprüche

1. Wischerblatt für einen Scheibenwischer, insbesondere einen Scheibenwischer für ein Kraftfahrzeug, umfassend ein Wischgummi (1) aus einem Elastomermaterial mit einer Wischlippe, **dadurch gekennzeichnet, dass** das Wischgummi (1) an der Wischlippe eine raue Oberfläche (3) aufweist und auf die raue Oberfläche (3) eine Beschichtung (5) aus einem weichen Material aufgebracht ist, die eine glatte Oberfläche (7) aufweist, wobei das Elastomermaterial die raue Oberfläche (3) aufweist, und wobei die raue Oberfläche (3) durch Laserablation, mechanische Abrasion oder den Einsatz eines Werkzeugs mit rauer Oberfläche erzeugt wird.

2. Wischerblatt gemäß Anspruche 1, **dadurch gekennzeichnet, dass** die raue Oberfläche (3) eine Rauhigkeit im Bereich von 10 bis 100 µm aufweist.

3. Wischerblatt gemäß Anspruch 1 oder 2, **dadurch gekennzeichnet, dass** auf das Elastomermaterial eine Beschichtung aufgebracht ist, die die raue Oberfläche (3) aufweist.

4. Wischerblatt gemäß Anspruch 3, **dadurch gekennzeichnet, dass** die Beschichtung, die die raue Oberfläche (3) aufweist, Füllstoffpartikel enthält.

5. Wischerblatt gemäß einem der Ansprüche 1 bis 4, **dadurch gekennzeichnet, dass** die Beschichtung (5) aus dem weichen Material Polyvinylalkohol enthält.

6. Wischerblatt gemäß einem der Ansprüche 1 bis 5, **dadurch gekennzeichnet, dass** die Beschichtung (5) aus dem weichen Material eine Rauhigkeit im Bereich von 1 bis 10 µm aufweist.

7. Wischerblatt gemäß einem der Ansprüche 1 bis 6, **dadurch gekennzeichnet, dass** die Beschichtung (5) aus dem weichen Material eine Schichtdicke (d) im Bereich von 10 bis 100 µm aufweist.

## Claims

1. Wiper blade for a windscreen wiper, in particular a windscreen wiper for a motor vehicle, comprising a wiper rubber (1) made of an elastomer material with a wiper lip, **characterized in that** the wiper rubber (1) has a rough surface (3) on the wiper lip and a coating (5) which is made of a soft material and has a smooth surface (7) is applied to the rough surface (3), wherein the elastomer material has the rough surface (3), and wherein the rough surface (3) is produced by laser ablation, mechanical abrasion or the use of a tool having a rough surface.

2. Wiper blade according to Claim 1, **characterized in that** the rough surface (3) has a roughness in the range of 10 to 100 µm.

3. Wiper blade according to Claim 1 or 2, **characterized in that** a coating which has the rough surface (3) is applied to the elastomer material.

4. Wiper blade according to Claim 3, **characterized in that** the coating which has the rough surface (3) contains filler particles.

5. Wiper blade according to one of Claims 1 to 4, **characterized in that** the coating (5) made of the soft material contains polyvinyl alcohol.

6. Wiper blade according to one of Claims 1 to 5, **characterized in that** the coating (5) made of the soft material has a roughness in the range of 1 to 10 µm.

7. Wiper blade according to one of Claims 1 to 6, **characterized in that** the coating (5) made of the soft material has a layer thickness (d) in the range of 10 to 100 µm.

## Revendications

1. Lame d'essuie-glace, en particulier pour essuie-glace de véhicule automobile, comportant un caoutchouc (1) de lame en matériau élastomère et dotée d'une lèvre de lame,
**caractérisée en ce que**
le caoutchouc (1) de lame présente sur la lèvre de la lame une surface rugueuse (3),
**en ce qu'**un revêtement (5) en matériau déformable présentant une surface lisse (7) est appliqué sur la surface rugueuse (3),
**en ce que** le matériau élastomère présente la surface rugueuse (3) et
**en ce que** la surface rugueuse (3) est formée par ablation au laser, abrasion mécanique ou utilisation d'un outil doté d'une surface rugueuse.

2. Lame selon la revendication 1, **caractérisée en ce que** la surface rugueuse (3) présente une rugosité de l'ordre de 10 à 100 µm.

3. Lame selon les revendications 1 ou 2, **caractérisée en ce qu'**un revêtement qui présente la surface rugueuse (3) est appliqué sur le matériau élastomère.

4. Lame selon la revendication 3, **caractérisée en ce que** le revêtement qui présente la surface rugueuse (3) contient des particules de charge.

5. Lame selon l'une des revendications 1 à 4, **caractérisée en ce que** le revêtement (5) en matériau déformable contient du poly(alcool vinylique).

6. Lame selon l'une des revendications 1 à 5, **caractérisée en ce que** le revêtement (5) en matériau déformable présente une rugosité de l'ordre de 1 à 10 µm.

7. Lame selon l'une des revendications 1 à 6, **caractérisée en ce que** le revêtement (5) en matériau déformable présente une épaisseur (d) de l'ordre de 10 à 100 µm.
